# FASCICULE DE BREVET EUROPEEN

(11) **EP 0 468 899 B1**
(45) Date de publication et mention de la délivrance du brevet: **03.11.1993**
(21) Numéro de dépôt: 91420264.3
(22) Date de dépôt: 19.07.1991
(51) Int. Cl.: B60B 7/08, B60B 7/02, F16B 37/14, F16B 35/06

(54) **Système de fixation démontable d'un élément par rapport à un organe fixe, ledit élément étant notamment un enjoliveur de roue de véhicule**
Vorrichtung zur abnehmbaren Befestigung eines Elements an ein festes Teil, insbesondere die Befestigung einer Radkappe
System to detachably connect a part to a fixed member, said part being in particular a wheel-cover

(30) Priorité: 20.07.1990 FR 9009544
(43) Date de publication de la demande: 29.01.1992
(73) Titulaire: ETABLISSEMENTS MANDUCHER S.A., 01100 Oyonnax (FR)
(72) Inventeur: Armanet, Jean-Yves, F-39240 Arinthod (FR)
(74) Mandataire: Karmin, Roger

(56) Documents cités:
- US-A- 4 382 635
- US-A- 4 707 035

## Description

La présente invention est relative à un système de fixation démontable d'un élément par rapport à un organe fixe comportant une embase tronconique, ledit système de fixation s'appliquant préférablement, bien que non exclusivement, à la fixation d'un enjoliveur de roue de véhicule par rapport aux goujons de fixation de cette roue.

Les enjoliveurs de roues de véhicule, qui sont maintenant de manière générale réalisés en matière plastique semi-rigide, soit comportent des trous à travers lesquels les goujons de fixation de la roue sont engagés avant de traverser les trous de ladite roue pour se visser dans le moyeu correspondant, soit sont munis de dispositifs propres à encliqueter des dispositifs de fixation par rapport à une partie de la roue. De tels dispositifs de fixation ne donnent pas satisfaction d'une manière générale ni au fabricant, ni à l'utilisateur, car leur démontage et leur remontage ne présente pas de conditions suffisantes de fiabilité. Un tel dispositif est connu par exemple par US-A-4 382 635.

Les perfectionnements qui font l'objet de la présente invention visent à remédier à ces inconvénients et à permettre la réalisation d'une fixation démontable, notamment d'enjoliveur pour roue de véhicule, qui réponde particulièrement bien aux divers desiderata de la pratique. C'est ainsi que dans le cas de son application à un enjoliveur, le démontage de celui-ci peut s'effectuer par introduction d'un outil dans une encoche périphérique assurant le basculement de l'enjoliveur par rapport à un point de son pourtour diamétralement opposé à ladite encoche et qui reste en appui contre la roue, tandis que sa retenue par rapport aux goujons de roue est particulièrement efficace.

A cet effet, le système suivant l'invention comprend en combinaison :
- une douille solidaire de l'élément et constituée de deux becs diamétralement opposés, de forme concave en direction de l'intérieur et réalisée en une matière semi-rigide, chaque bec étant muni sur sa face interne, près de son extrémité libre, d'une lèvre constituée par une partie tronconique ouverte en direction de l'élément et par un pan coupé orienté obliquement en direction inverse de celle de la partie tronconique, l'intersection de cette dernière et du pan coupé déterminant une arête elliptique, l'angle au sommet de l'embase tronconique de l'organe fixe étant inférieur à celui de la partie tronconique de la lèvre afin que celle-ci coopère avec ladite embase suivant une ligne elliptique située à proximité immédiate de l'arête précitée, sur ladite partie tronconique ;
- et des moyens de rappel élastique de la douille en direction opposée à celle de l'organe fixe afin de maintenir la ligne elliptique en appui contre l'embase tronconique.

Lorsqu'un tel système de fixation est appliqué à un enjoliveur de roue de véhicule, celui-ci en comporte un certain nombre sur sa face interne en correspondance avec le nombre des goujons de roue.

Le dessin annexé, donné à titre d'exemple, permettra de mieux comprendre l'invention, les caractéristiques qu'elle présente et les avantages qu'elle est susceptible de procurer :

Fig. 1 est une vue en perspective partielle d'un élément comportant un système de fixation établi conformément à l'invention.

Fig. 2 en est une coupe transversale.

Fig. 3 illustre l'organe fixe par rapport auquel l'élément muni d'un système de fixation suivant l'invention doit être fixé de manière démontable.

Fig. 4 est une vue de détail en coupe à grande échelle illustrant la manière dont le système de fixation suivant fig. 1 et 2 est associé à l'organe fixe de fig. 3.

Fig. 5 est une vue en élévation d'un enjoliveur de roue de véhicule comportant sur sa face intérieure quatre systèmes de fixation suivant l'invention.

Fig. 6 illustre en coupe la manière dont l'enjoliveur de fig. 5 est associé à la roue d'un véhicule.

Fig. 7 est une coupe à plus grande échelle de la zone périphérique de l'enjoliveur illustré en fig. 5.

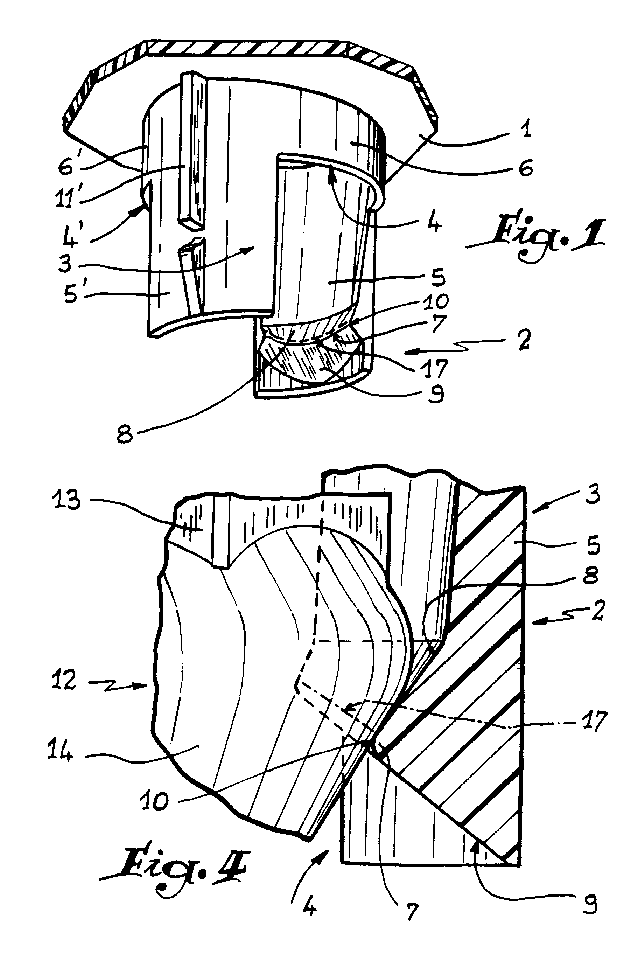

On a illustré en fig. 1 un élément ou panneau 1 comportant un système de fixation 2 établi conformément à l'invention. L'élément 1 et le système 2 sont, dans l'exemple représenté, réalisés par moulage en une seule pièce d'une matière plastique semi-rigide.

Le système de fixation 2 est réalisé sous la forme d'une douille tubulaire 3 qui comporte deux découpes 4, 4' diamétralement opposées déterminant entre elles deux becs 5, 5' symétriques. On observe que les découpes 4, 4' ne s'étendent pas sur toute la hauteur de la douille 3, mais laissent sur celle-ci un bandeau 6, 6' de faible hauteur dont l'arête libre forme le fond de chacune des découpes 4, 4' .

Conformément à l'invention, chaque bec comporte sur sa face interne concave et près de son extrémité libre une lèvre 7, 7' (fig. 2).

Pour simplifier la description, seul le bec 5 va être décrit ci-dessous, celui 5' étant bien entendu absolument identique.

La lèvre 7 est constituée par une partie tronconique 8 ouverte en direction de l'élément 1 et par un pan coupé 9 orienté obliquement en direction inverse de celle de la partie tronconique 8. Ce pan coupé détermine avec la partie tronconique une arête arrondie 10 de forme elliptique. Le pan coupé 9 est issu du bord extrême du bec 5 qui se prolonge donc en dessous d'une partie de la lèvre 7, comme parfaitement bien illustré en fig. 1. Entre la lèvre 6 et l'origine du bec 5, c'est-à-dire l'élément 1, la paroi de ce bec est d'épaisseur croissante, c'est-à-dire que sa face interne au-dessus de la lèvre est tronconique.

Une nervure 11' est prévue le long de la génératrice centrale du bec 5'.

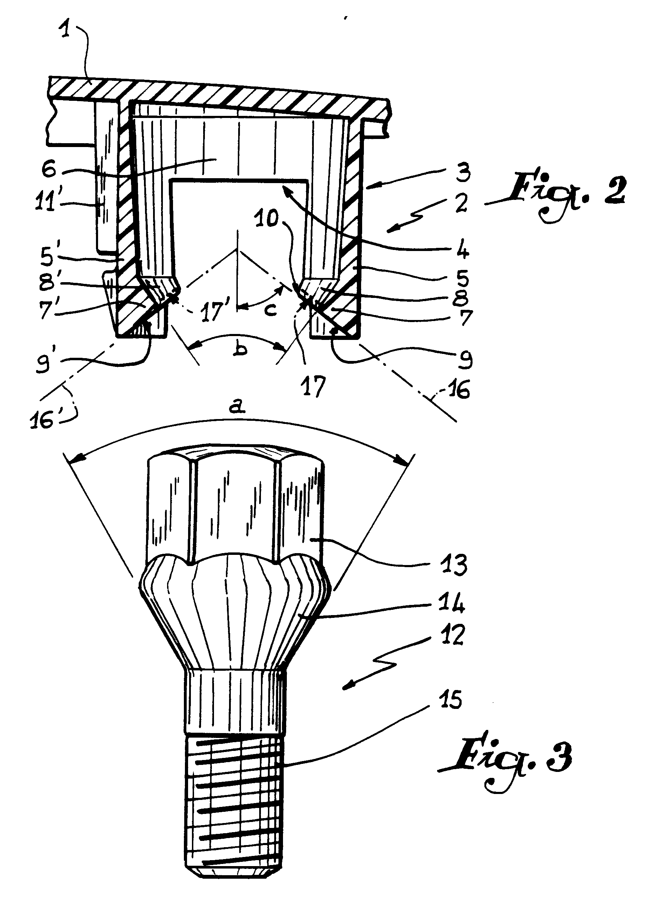

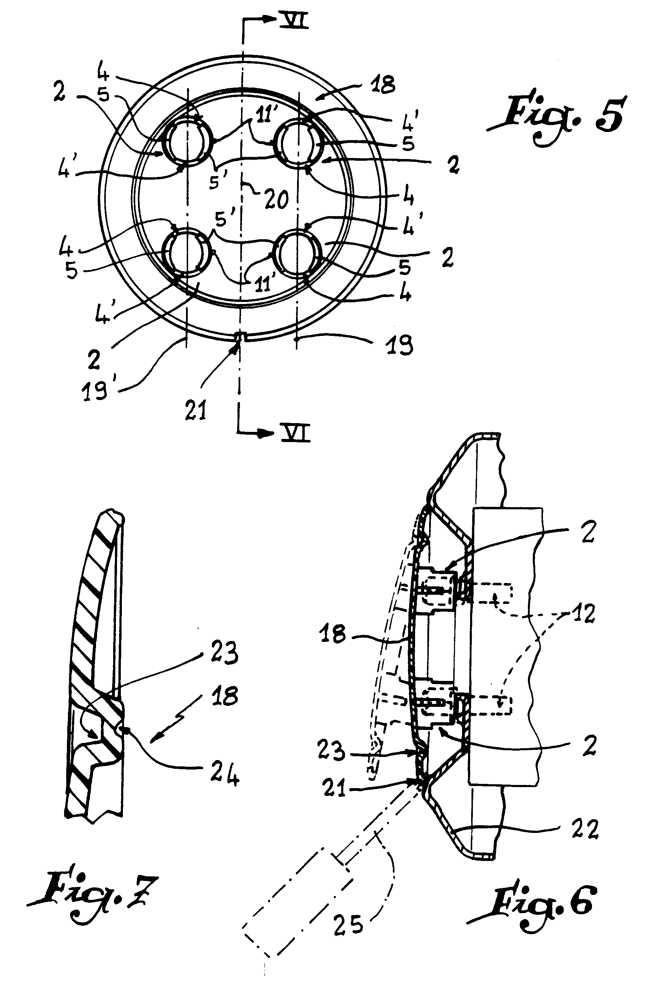

Le goujon usuel illustré en fig. 3, qui est affecté de la référence 12, comprend une tête 13 à section hexagonale qui surmonte une embase tronconique 14 à laquelle aboutit une vis 15. L'angle au sommet a de l'embase tronconique 14 du goujon 12 est inférieur à celui b du cône fictif contenant les deux parties tronconiques 8, 8' pour des raisons qu'on expliquera en référence à fig. 4. On observe en fig. 2 les traces 16, 16' des deux plans obliques contenant les pans coupés 9, 9' . Ces deux plans qui concourent en un point situé sur l'axe central de la douille 3 déterminent avec cet axe un angle c de l'ordre de 52°.

On a illustré en fig. 4 la manière dont la lèvre 7 du bec 5 du système de fixation 2 coopère avec l'embase tronconique 14 du goujon 13. Du fait de la différence entre les angles a et b et du fait que l'arête 10 est arrondie, la partie tronconique 8 et l'embase tronconique 14 ne sont en contact que suivant une ligne elliptique 17 parallèle à l'arête 10 et illustrée en traits discontinus en fig. 1, 2 et 4. Les surfaces de l'embase tronconique 14 et de la partie tronconique 8 située au-dessus de la ligne 17 n'étant pas en contact, cette dernière divergeant par rapport à l'embase tronconique précitée. Bien entendu, il en va de même de la coopération de la lèvre 7' avec l'embase tronconique 14 qui s'effectue suivant une ligne elliptique 17' représentée seulement en fig. 2.

Une application particulièrement intéressante du système de fixation décrit ci-dessus concerne un enjoliveur 18 de roue de véhicule illustré en fig. 5. La face interne de cet enjoliveur est pourvue de quatre systèmes de fixation 2 dont les découpes 4, 4' se trouvent allignées sur deux axes géométriques parallèles 19, 19' . Sur un diamètre 20 de l'enjoliveur 18 parallèle aux axes géométriques 19, 19' le pourtour de l'enjoliveur comporte une encoche 21.

Comme illustré en fig. 6, qui est une coupe de l'enjoliveur suivant VI-VI (fig. 5) comportant également une coupe partielle d'une roue 22, on aperçoit que l'enjoliveur est pourvu entre son pourtour et l'emplacement des quatre systèmes de fixation 2 d'une gorge 23 donnant à sa zone périphérique une certaine élasticité. Pour augmenter celle-ci, la face interne du fond de la gorge est munie d'une rainure centrale 24 (fig. 7) qui diminue l'épaisseur du fond en question. Grâce à l'élasticité de la zone périphérique de l'enjoliveur, celui-ci peut d'une part être appliqué élastiquement contre la roue 22 et d'autre part absorber les différences de dimensions de celle-ci.

Pour mettre l'enjoliveur en place, il suffit de présenter les quatre systèmes de fixation 2 en face des quatre goujons correspondants 12 et d'exercer en direction de la roue une force parallèle à l'axe desdits goujons pour que les lèvres de chaque système de fixation viennent coopérer avec les embases des goujons, comme décrit en référence à fig. 4. De plus, la périphérie de l'enjoliveur vient prendre appui élastiquement contre la roue 22, de telle sorte que les systèmes de fixation sont chargés élastiquement en direction opposée à celle des organes ou goujons 12, si bien que l'application des lignes elliptiques 17, 17' parties tronconiques 8, 8' est parfaite contre les embases 14 des goujons.

Pour effectuer le démontage de l'enjoliveur, il suffit d'engager un outil 25 dans l'encoche 21 et d'effectuer un mouvement de bras de levier avec cet outil pour faire basculer l'enjoliveur autour de son point de contact avec la roue 22 qui se trouve diamétralement opposé à l'encoche 21. Du fait que les découpes des systèmes de fixation 2 se trouvent orientées comme indiqué en référence à fig. 5, l'extraction est aisée sans aucun blocage contre les têtes des goujons.

Bien entendu, le nombre de systèmes de fixation 2 est identique à celui des goujons de roues 12, ce nombre pouvant être quelconque.

Dans un mode d'exécution préféré, l'enjoliveur et ses systèmes de fixation sont moulés d'une seule pièce en une matière plastique semi-rigide appropriée.

Il va de soi que tout moyen de rappel élastique peut être utilisé pour appliquer la ligne elliptique 17, 17' de chaque lèvre 7, 7' contre l'embase tronconique 14 de l'organe fixe 12, que ces moyens élastiques soient indépendants ou non de l'élément ou panneau 1 et/ou de l'enjoliveur 18.

## Revendications

1. Système de fixation démontable (2) d'un élément (1) par rapport à un organe fixe (12) comportant une tête (13) surmontant une embase tronconique (14), caractérisé en ce qu'il comprend en combinaison :
- une douille (3) solidaire de l'élément (1) et constituée de deux becs (5, 5') diamétralement opposés, de forme concave en direction de l'intérieur et réalisée en une matière semi-rigide, chaque bec (5, 5') étant muni sur sa face interne, concave, près de son extrémité libre, d'une lèvre (7, 7') constituée par une partie tronconique (8, 8') ouverte en direction de l'élément et par un pan coupé (9, 9') orienté obliquement en direction inverse de celle de la partie tronconique, l'intersection de cette dernière et du pan coupé déterminant une arête elliptique (10, 10') l'angle au sommet (a)) de l'embase tronconique (14) de l'organe fixe étant inférieur à celui (b) de la partie tronconique (8, 8') de la lèvre (7, 7') afin que celle-ci coopère avec ladite embase suivant une ligne elliptique (17, 17') située à proximité immédiate de l'arête précitée sur ladite partie tronconique ;
- et des moyens de rappel élastique de la douille (3) en direction opposée à celle de l'organe fixe (12) afin de maintenir la ligne elliptique (17, 17') en appui contre l'embase tronconique (14).

2. Système de fixation suivant la revendication 1, caractérisé en ce que chaque douille tubulaire (3) est pourvue de deux découpes (4, 4') diamétralement opposées déterminant les becs (5, 5'), la douille (3) et l'élément (1) étant réalisés d'une pièce en une matière plastique semi-rigide.

3. Système de fixation suivant la revendication 2, caractérisé en ce que la paroi de chaque bec (5, 5') présente une épaisseur croissante depuis sa liaison avec l'élément (12) jusqu'à sa lèvre intérieure (7, 7') et se prolonge en dessous d'une partie de celle-ci.

4. Panneau, notamment enjoliveur (18) de roue de véhicule, caractérisé en ce qu'il comporte au moins un système de fixation (2) suivant l'une quelconque des revendications 1 à 3.

5. Enjoliveur de roue suivant la revendication 4, caractérisé en ce que les axes géométriques des découpes (4, 4') de ses systèmes de fixation (2) sont parallèles, la périphérie dudit enjoliveur étant appliquée élastiquement contre la roue (22) tandis qu'elle est pourvue d'une encoche de démontage (21) située sur un diamètre (20) parallèle aux axes géométriques (19, 19') desdites découpes.

6. Enjoliveur suivant la revendication 5, caractérisé en ce qu'il comprend une gorge circulaire (23) située à proximité de son pourtour, le fond de ladite gorge (23) étant déformable en vue d'une part d'assurer l'application élastique de la périphérie de l'enjoliveur contre la roue (22) et d'autre part d'absorber les différences de dimensions de celle-ci.

7. Enjoliveur suivant la revendication 6, caractérisé en ce que le fond de la gorge (23) comporte une rainure (24) diminuant son épaisseur afin de procurer une excellente élasticité de la zone de l'enjoliveur délimitée entre cette gorge et son pourtour.

8. Système de fixation suivant la revendicaiton 1, caractérisé en ce qu'au moine l'un (5') de ses becs (5, 5') comporte sur sa face extérieure une nervure longitudinale (11').

## Patentansprüche

1. Befestigungssystem (2) zur demontierbaren Befestigung eines Elementes (1) in bezug auf ein feststehendes Organ (12), das einen sich an einen kegelstumpfartigen Ansatz (14) anschließenden Kopf (13) aufweist,
**dadurch gekennzeichnet,**
daß es in Kombination umfaßt:
- eine eine Einheit mit dem Element (1) bildende Hülse (3), die zwei sich diametral gegenüberliegende Backen (5,5') in in Richtung des Inneren konkaver Form aufweist und aus einem halbsteifen Material hergestellt ist, wobei jede Backe (5,5') auf ihrer inneren konkaven Fläche in der Nähe ihres freien Endes mit einer Lippe (7,7') versehen ist, die von einem kegelförmigen, in Richtung des Elementes offenen Bereich und einer schrägen Kante in umgekehrter Richtung zu der des kegelstumpfförmigen Bereichs gebildet wird, daß die Schnittstelle des letzteren und der schrägen Kante eine elliptische Kante (10,10') bestimmt, wobei der Kegelwinkel (a) des kegelstumpfartigen Ansatzes (14) des feststehenden Organs kleiner ist als der (b) des kegelstumpfförmigen Bereichs (8,8') der Lippe (7,7') ist, damit dieser mit dem Ansatz entsprechend einer elliptischen Linie (17,17') zusammenarbeitet, die in unmittelbarer Nähe der zuvor erwähnten Kante auf dem kegelstumpfförmigen Bereich liegt,
- und einer elastischen Rückstelleinrichtung der Hülse (3) in einer zu der des feststehenden Organs (12) entgegengesetzten Richtung, um ein Abstützen der elliptischen Linie (17,17') gegen den kegelstumpfartigen Ansatz (14) aufrecht zu erhalten.

2. Befestigungssystem nach Anspruch 1, dadurch gekennzeichnet, daß jede rohrförmige Hülse (3) mit zwei sich diametral gegenüberliegenden und die Backen (5,5') bestimmenden Einschnitten (4,4') versehen ist, wobei die Hülse (3) und das Element (1) aus einem Stück aus einem halbstarren Material hergestellt sind.

3. Befestigungssystem nach Anspruch 2, dadurch gekennzeichnet, daß die Wand jeder Backe (5,5') eine von der Verbindung mit dem Element (12) bis zu ihrer inneren Lippe (7,7') steigende Dicke aufweist und sich unterhalb eines Teils derselben verlängert.

4. Blende, insbesondere Zierkappe für ein Fahrzeugrad, dadurch gekennzeichnet, daß es mindestens ein Befestigungssystem (2) nach einem der Ansprüche 1 bis 3 aufweist.

5. Zierkappe für ein Rad nach Anspruch 4, dadurch gekennzeichnet, daß die geometrischen Achsen der Einschnitte (4,4') ihrer Befestigungssysteme (2) parallel sind, wobei der Umfang der Zierkappe elastisch gegen das Rad (22) anliegt, während es mit einer Demontiervertiefung (21) versehen ist, die sich auf einem Durchmesser (20) parallel zu den geometrischen Achsen (19,19') der Einschnitte befindet.

6. Zierkappe nach Anspruch 5, dadurch gekennzeichnet, daß sie eine in der Nähe ihres äußeren Umfangs liegende kreisförmige Nut (23) aufweist, wobei der Boden der Nut (23) deformierbar ist, um einerseits das elastische Andrücken des Umfanges der Zierkappe gegen das Rad (23) sicherzustellen und andererseits die Dimensionsunterschiede desselben auszugleichen.

7. Zierkappe nach Anspruch 6, dadurch gekennzeichnet, daß der Boden der Nut (23) eine Einkerbung (24) aufweist, die seine Dicke verringert, um eine hervorragende Elastizität des zwischen der Nut und ihrem äußeren Umfang liegenden Bereichs zu liefern.

8. Befestigungssystem nach Anspruch 1, dadurch gekennzeichnet, daß zumindest eine der Backen (5,5') auf ihrer Außenfläche eine Längsrippe (11') aufweist.

## Claims

1. System (2) to detachably connect an element (1) to a fixed member (12) comprising a head (13) mounted on a frustoconical shoulder (14), characterised in that it comprises in combination:
- a socket (3) integral with the element (1) and comprising two diametrically opposed jaws (5,5'), concave in an inward direction and formed of a semi-rigid material, each jaw (5,5') being provided on its internal concave face, near to its free end, with a lip (7,7') formed by a frustoconical part (8,8') open in the direction of the element and by a cant (9,9') obliquely orientated in the opposite direction to that of the frustoconical part, the intersection of the latter and of the cant defining an elliptical ridge (10,10'), the angle at the apex (a) of the frustoconical shoulder (14) of the fixed member being less than that (b) of the frustoconical part (8,8') of the lip (7,7') such that the latter cooperates with said shoulder along an elliptical line (17,17') situated in the immediate vicinity of the aforementioned ridge on said frustoconical part;
- and elastic return means of the socket (3) in a direction opposite to that of the fixed member (12) to keep the elliptical line (17,17') supported against the frustoconical shoulder.

2. Fixing system according to claim 1, characterised in that each tubular socket (3) is provided with two diametrically opposed cut-outs (4,4') defining the jaws (5,5'), the socket (3) and the element (1) being formed in one piece in a semi-rigid plastic material.

3. Fixing system according to claim 2, characterised in that the wall of each jaw (5,5') is of increasing thickness from its engagement with the element (12) up to its inner lip (7,7') and extends below a part of the latter.

4. Panel, in particular a vehicle wheel cover (18), characterised in that it comprises at least one fixing system according to any of claims 1 to 3.

5. Wheel cover according to claim 4, characterised in that the geometric axes of the cut-outs (4,4') of its fixing systems (2) are parallel, the periphery of said cover being elastically applied against the wheel (22) while being provided with a removal notch (21) situated on a diameter (20) parallel to the geometric axes (19,19') of said cut-outs.

6. Wheel cover according to claim 5, characterised in that it comprises a circular channel (23) located in the vicinity of its circumference, the bottom of said channel (23) being deformable in order on the one hand to ensure the elastic application of the periphery of the cover against the wheel (22) and on the other hand to absorb the differences in dimensions of the latter.

7. Wheel cover according to claim 6, characterised in that the bottom of the channel (23) comprises a groove (24) reducing its thickness in order to achieve an excellent elasticity of the zone of the cover defined between this channel and its circumference.

8. Fixing system according to claim 1, characterised in that at least one (5') of its jaws (5,5') comprises a longitudinal rib (11') on its outer face.
